(19) Europäisches Patentamt
European Patent Office
Office européen des brevets

(11) **EP 2 365 901 B1**

(12) **EUROPÄISCHE PATENTSCHRIFT**

(45) Veröffentlichungstag und Bekanntmachung des Hinweises auf die Patenterteilung:
**23.01.2013 Patentblatt 2013/04**

(21) Anmeldenummer: **09798901.6**

(22) Anmeldetag: **01.12.2009**

(51) Int Cl.:
**B29C 35/08** (2006.01)       **B29C 49/64** (2006.01)

(86) Internationale Anmeldenummer:
**PCT/EP2009/066091**

(87) Internationale Veröffentlichungsnummer:
**WO 2010/063686 (10.06.2010 Gazette 2010/23)**

(54) **VORRICHTUNG ZUM ERWÄRMEN VON KUNSTSTOFFBEHÄLTNISSEN**

DEVICE FOR HEATING PLASTIC CONTAINERS

DISPOSITIF DE RÉCHAUFFAGE DE CONTENEURS EN MATIÈRE PLASTIQUE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **04.12.2008 DE 102008060572**

(43) Veröffentlichungstag der Anmeldung:
**21.09.2011 Patentblatt 2011/38**

(73) Patentinhaber: **Krones AG**
**93073 Neutraubling (DE)**

(72) Erfinder:
• **ZIMMERER, Johann**
**93170 Bernhardswald (DE)**

• **SENN, Konrad**
**93059 Regensburg (DE)**
• **WINKLER, Günter**
**93199 Zell (DE)**
• **APELSMEIER, Andreas**
**85131 Pollenfeld (DE)**

(74) Vertreter: **Bittner, Bernhard**
**Hannke Bittner & Partner**
**Patent- und Rechtsanwälte**
**Ägidienplatz 7**
**93047 Regensburg (DE)**

(56) Entgegenhaltungen:
**WO-A2-2007/131701     JP-A- 9 295 342**

EP 2 365 901 B1

**Beschreibung**

Die vorliegende Erfindung bezieht sich auf eine Vorrichtung und ein Verfahren zum Erwärmen von Kunststoffbehältnissen und insbesondere von Kunststoffvorformlingen. Im Bereich der Getränke herstellenden Industrie ist man verstärkt dazu übergangen, anstelle von Glasflaschen Kunststoffbehältnisse bzw. PET-Behältnisse zu verwenden. Bei der Herstellung dieser Behältnisse werden zunächst Kunststoffvorformlinge zur Verfügung gestellt, diese erwärmt und einem Expansionsprozess zugeführt, um auf diese Weise die fertigen Kunststoffbehältnisse zu erhalten. Dabei ist es im Stand der Technik üblich, die Kunststoffvorformlinge durch eine Heizstrecke laufen zu lassen, innerhalb derer sie üblicherweise mit einer Infrarotstrahlung erwärmt werden.

Daneben ist es jedoch im Stand der Technik auch bekannt, zur Erwärmung der Kunststoffvorformlinge Mikrowellenstrahlung einzusetzen. Dabei wird die Mikrowellenstrahlung mit einer Mikrowellenerzeugungseinrichtung, wie einem Magnetron, erzeugt und anschließend über eine Leitungseinrichtung, wie einen Wellenhohlleiter, auf die zu erwärmenden Kunststoffvorformlinge geleitet. Die auf die Vorformlinge gelangende Mikrowellenenergie kann dabei mittels Tuning-Einheiten gesteuert werden. Üblicherweise wird dabei die auf die Kunststoffvorformlinge aufgebrachte Leistung vor Inbetriebnahme der Vorrichtung eingestellt und anschließend wird die Vorrichtung mit dieser festgesetzten Leistung betrieben.

Damit werden zur Erwärmung die Vorformlinge in einem Resonator mit einem elektromagnetischen Wechselfeld beaufschlagt, welches jedoch auch im Inneren des Materials eine Anregung der Dipole erzeugt, was wiederum zur Aufheizung der Vorformlinge führt.

Aus der DE 10 2007 022 386 A1 ist eine Erwärmungsvorrichtung für Kunststoffrohlinge bekannt. Dabei wird der zu erwärmende Bereich der Vorformlinge zumindest während eines Teils der zeitlichen Dauer der Erwärmung in einem Resonator mit Mikrowellen beaufschlagt.

Die DE 10 2006 015 475 A1 beschreibt ebenfalls ein Verfahren und eine Vorrichtung zur Temperierung von Vorformlingen. Bei diesem Verfahren werden zylindrisch aufgebaute Resonatoren verwendet, die in ihrem Aufbau vergleichsweise hohe Wandstromverluste aufweisen.

Die WO 2007/131701 und JP 09 295342 beschreiben weitere Erwärmungsvorrichtungen für Vorformlinge.

Der vorliegenden Erfindung liegt daher die Aufgabe zugrunde, den Wirkungsgrad derartiger Erwärmungseinrichtungen zu erhöhen und insbesondere, Verluste für derartige Erwärmungseinrichtungen zu verringern.

Dies wird erfindungsgemäß durch den Gegenstand des unabhängigen Anspruchs erreicht. Vorteilhafte Ausführungsformen und Weiterbildungen sind Gegenstand der Unteransprüche.

Eine erfindungsgemäße Vorrichtung zum Erwärmen von Behältnissen und insbesondere von Kunststoffvorformlingen weist wenigstens eine Mikrowellenerzeugungseinheit auf, welche ein elektromagnetisches Wechselfeld in Form von Mikrowellen erzeugt. Weiterhin ist eine Mikrowellenübertragungseinheit vorgesehen, welche die von der Mikrowellenerzeugungseinheit erzeugten Mikrowellen an eine Resonateinheit überträgt, sowie eine Transporteinrichtung, welche die Kunststoffvorformlinge gegenüber der Resonatoreinheit transportiert. Dabei weist die Resonatoreinheit ein einen Aufnahmeraum zur Erwärmung der Kunststoffvorformlinge ausbildendes Resonatorgehäuse mit wenigstens einer den Kunststoffvorformlingen zugewandten Innenwandung sowie einen Einkoppelbereich auf, über den Mikrowellen in die Resonatoreinheit eingeführt werden.

Erfindungsgemäß ist die Innenwandung an ihrer den Kunststoffvorformlingen zugewandten Oberfläche zumindest abschnittsweise derart vergütet, dass durch diese Vergütung in der Innenwandung die durch die Mikrowellen hervorgerufenen Wandstromverluste verringert werden.

Es wird daher erfindungsgemäß vorgeschlagen, die besagte Innenwandung bzw. deren Oberfläche in einer vorbestimmten Art und Weise zu gestalten, welche die Wandstromverluste verringert. Unter einer Vergütung kann es sich dabei um eine Bearbeitung wie ein Polieren der Wandung handeln, aber auch um eine bewusste Strukturierung sowie auch um Kombinationen aus diesen Maßnahmen. Dies wird im Folgenden genauer erläutert.

Bevorzugt ist die Innenwandung zur Verringerung deren Oberflächenrauhigkeit poliert.

Eine Problemstellung, die sich durch den dielektrischen Verlustfaktor von gängigen Materialien für Kunststoffvorformlinge wie beispielsweise PET ergibt, ist die sehr hohe Feldstärke, die im Resonator herrscht bzw. zur Erwärmung nötig ist. Diese starke Feldüberhöhung, die zu einer schnellen Erwärmung notwendig ist, führt jedoch zu einem großen Wandstrom in der leitenden Resonatorwandung und auch in Wandungen der Mikrowellenzuleitung. Die besagten Wandströme fließen aufgrund der hohen Frequenz nur in einer dünnen Oberflächenschicht, was auch als Skin-Effekt bekannt ist.

Die erfindungsgemäße Idee besteht darin, die Verluste, die durch diese Wandströme auftreten, möglichst gering zu halten, um somit den Gesamtprozess energetisch zu verbessern. So ist es beispielsweise möglich, die besagten Oberflächen zu polieren. Da durch die erwähnte Oberflächenrauhigkeit der Stromweg vergrößert wird, nimmt auch mit zunehmender Rauhigkeit der Verlust zu. Bevorzugt weist die besagte Innenwandung, d.h. die polierte Innenwandung, eine Oberflächenrauhigkeit auf, welche geringer ist als $3 \, \mu$m, bevorzugt geringer als $2 \, \mu$m und besonders bevorzugt geringer als $1 \, \mu$m. Die Oberflächenrauhigkeit sollte allgemein geringer und bevorzugt erheblich geringer sein als die Eindringtiefe $\delta$

der Mikrowelle sein, d.h.:

$$R_{max} \ll \delta$$

Bei Aluminium und einer Frequenz von 2,45 GHz sollte $R_{max}$ kleiner als 1 $\mu$m sein. Bevorzugt weist die Innenwandung eine polierte oder präzisionsgefräste Oberfläche auf.

Erfindungsgemäßβ setzt sich die Innenwandung aus einem Trägermaterial und einer auf der den Kunststoffvorformlingen zugewandten Oberfläche dieses Trägermaterials angeordneten Beschichtung zusammen, wobei diese Beschichtung eine höhere Stromleitfähigkeit aufweist als das Trägermaterial. Im Stand der Technik sind die besagten Innenwandungen der Resonatoren üblicherweise einteilig bzw. unbeschichtet ausgebildet d.h. weisen keine spezielle Beschichtung auf. Bei dem Trägermaterial kann es sich beispielsweise um einen Aluminiumblock handeln. Weiterhin kann das besagte Trägermaterial beispielsweise galvanisch versilbert oder verkupfert sein.

Da der besagte Strom nur durch eine dünne Schicht fließt, kann der Widerstand und damit auch der Verlust durch Aufbringen einer hochleitfähigen Schicht gesenkt werden. Vorzugsweise ist auch die Schichtdicke D größer als die oben erwähnte Eindringtiefe $\delta$. So kann beispielsweise gelten:

$$1 \text{ mm} \gg D > \delta.$$

Durch diese Beschichtung wird damit sichergestellt, dass nur in der besagten leitenden Schicht ein Strom fließt. Es wäre jedoch auch möglich, den gesamten Resonator massiv aus einem hochstromleitfähigen Material wie beispielsweise aus Kupfer herzustellen.

Bei einer weiteren bevorzugten Ausführungsform ist das Resonatorgehäuse mehrteilig aufgebaut. Die Ausführung des Resonators aus mehreren Bauteilen hat fertigungstechnische Vorteile. Weiterhin können durch diesen mehrteiligen Aufbau des Resonatorgehäuses und damit beispielsweise auch der Innenwandung die besagten Stromverluste reduziert werden. Bevorzugt werden zunächst mehrere Teile des Resonators gefertigt, anschließend zusammengefügt und schließlich mit einer insbesondere einteiligen Metallschicht überzogen, welche die einzelnen Schnitte überdeckt.

Bei einer weiteren vorteilhaften Ausführungsform ist der Resonator teilbar. Dies ist insbesondere von Vorteil, da man den Resonator auch nachträglich noch öffnen kann. Andererseits können durch derartige Teilungslinien höhere Stromverluste innerhalb des Resonators entstehen. Bevorzugt wird dabei das Resonatorgehäuse derart aufgebaut, dass Teilungslinien, insbesondere Teilungslinien innerhalb der Innenwandungen im Wesentlichen parallel zu der Stromrichtung der Wandströme verlaufen. Auf diese Weise können, wie unten genauer gezeigt wird, die Strömungsverluste ebenfalls verringert werden.

Bei einer weiteren vorteilhaften Ausführungsform weist die Innenwandung in einer parallel zu einer Richtung des durch die Mikrowellen in der Innenwandung erzeugten Stroms verlaufenden Richtung eine Strukturierung auf. Bei dieser Strukturierung kann es sich beispielsweise um die erwähnten Schnitte handeln, die zum zweiteiligen Ausbilden des Gehäuses nötig sind. Es wäre jedoch auch möglich, beispielsweise eine wellenartige oder zackenartige Struktur mit Ausnehmungen und Vertiefungen vorzusehen, wobei sich diese Ausnehmungen und Vertiefungen parallel zu der Stromrichtung der Wandströme erstrecken.

Der Gesamtwiderstand der Innenwandung ist abhängig von dem Oberflächenwiderstand RF bezogen auf eine Länge 1 (parallel zur Stromrichtung) des Strompfades und einer Breite b (welche senkrecht zu der Stromrichtung steht) und lässt sich wie folgt beschreiben:

$$R = R_f * 1/b.$$

Um diesen Strom bzw. dessen Widerstand zu verringern, ist es daher möglich, parallel zur Stromrichtung Wellen oder Zacken in die Oberfläche einzuarbeiten, um auf diese Weise die besagte Breite b künstlich zu erhöhen und damit den Widerstand zu verringern. Es ist dabei auch möglich, die oben beschriebenen Maßnahmen zu kombinieren, beispielsweise eine Beschichtung mit der genannten Strukturierung oder auch eine polierte Oberfläche mit der genannten Strukturierung und zusätzlich auch die genannten Schnitte parallel zur Stromflussrichtung vorzusehen.

Es wäre jedoch auch möglich, den Resonator einteilig aufzubauen. Dabei ist es möglich, auf ein Kunststoffnegativ elektrogalvanisch eine Metallschicht abzuscheiden und anschließend dieses negativ chemisch zu entfernen. Es wäre jedoch auch möglich, den Resonator unter Verwendung von Spezialwerkzeug spanend aus einem Teil zu fertigen.

Bevorzugt ist die genannte Strukturierung in Form von Wellen und/oder Zacken ausgebildet.

Falls es in besonderen Ausführungsformen aus Kosten- oder Fertigungsgründen nicht vermeidbar sein sollte, dass ein Schnitt nicht parallel zum Stromfluss liegt, so kann in diesem Schnitt in der Innenseite eine Nut vorgesehen sein. Diese Nut verkleinert die Auflagefläche einer Verschraubung und erhöht auf diese Weise den Anpressdruck. Durch den Anpressdruck liegen die beiden Flächen besser aufeinander, wodurch sich der besagte Schnitt minimiert und auf diese Weise der Widerstand verringert wird.

Durch jede der genannten Maßnahmen kann daher der elektrische Widerstand der Innenwandung, insbesondere in der Stromflussrichtung der Wandströme, im Vergleich zu Ausführungsformen ohne jegliche Vergütung, verringert werden. Auch die Ausbildung der oben genannten Schnitte parallel zur Stromflussrichtung stellt in diesem Zusammenhang eine Maßnahme zur Vergütung der Innenwandung, insbesondere für mehrteilige Resonatorgehäuse dar.

Weitere Vorteile und Ausführungsformen ergeben sich aus den beigefügten Zeichnungen:

Darin zeigen:

Fig. 1 Eine schematische Darstellung einer Vorrichtung zum Erwärmen von Behältnissen;

Fig. 2 eine schematische Darstellung einer erfindungsgemäßen Vorrichtung in einer ersten Ausführungsform;

Fig. 3 eine schematische Darstellung eines Resonators für die Vorrichtung aus Fig. 2; und

Fig. 4 eine Darstellung einer Innenwandung für eine bevorzugte Ausführungsform der Erfindung.

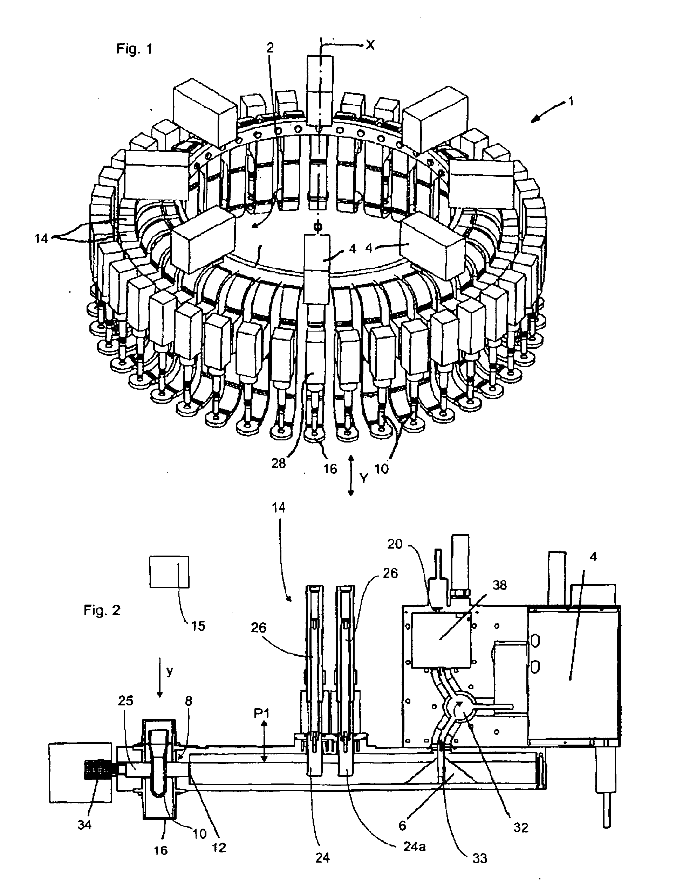

Figur 1 zeigt eine Vorrichtung 1 zum Erwärmen von Behältnissen bzw. Kunststoffvorformlingen 10. Dabei weist die Vorrichtung 1 eine Vielzahl von Mikrowellenerzeugungseinrichtungen 4 auf, wobei die von diesen Mikrowellenerzeugungseinrichtungen 4 erzeugten Mikrowellen über Leitungseinrichtungen zu Resonatoren 16 gelangen und von diesen aus in Behältnisse 10, bei denen es sich hier um Vorformlinge handelt, eingebracht werden. Die Vorrichtung kann jedoch auch zum Erwärmen bereits fertig gestellter Kunststoffbehältnisse verwendet werden.

Dabei bezieht sich das Bezugszeichen 2 auf eine Transporteinrichtung, welche bewirkt, dass die einzelnen Behältnisse um eine Drehachse X gedreht werden. Das Bezugszeichen 14 bezieht sich in seiner Gesamtheit auf Energieabstimmungseinheiten, welche die auf die Behältnisse aufgebrachten Energien regulieren. Mit Hilfe von Antriebseinrichtungen 28 kann die Position der Behältnisse 10 gegenüber den Resonatoren 16 in der Richtung Y, welche parallel zu der Drehachse X verläuft, verschoben werden.

Figur 2 zeigt eine erfindungsgemäße Vorrichtung 1 in einer ersten Ausführungsform. Diese Vorrichtung weist ein Magnetron 4 auf, in welches bereits eine Heizeinrichtung (nicht gezeigt) integriert ist. In diesem Magnetron 4 werden die Mikrowellen erzeugt und in einen Zirkulator 32 geleitet. Ausgehend von diesem Zirkulator werden die Mikrowellen mit Hilfe einer Einkoppeleinrichtung 33 in eine Leitungseinrichtung 6 in Form eines Mikrowellenhohlleiters bzw. Rechteckhohlleiters eingeleitet. Von dort gelangen die Mikrowellen über einen Einkoppelbereich in einen Resonator 16 bzw. die innerhalb dieses Resonators angeordneten Behältnisse 10. Die Behältnisse 10 werden hier in Richtung des Pfeils P1 in den Resonator 16 eingeschoben.

Das Bezugszeichen 34 bezieht sich auf einen Temperatursensor und insbesondere ein Pyrometer, welches an dem Resonator 16 angeordnet ist und berührungslos die Temperatur der Vorformlinge 10 misst. Die von den Vorformlingen zurück gelangenden Mikrowellen gelangen wiederum in den Zirkulator und von dort in eine Wasserlast 38. Diese Wasserlast 38 dient zum Dämpfen der Mikrowellen. Mit Hilfe einer Sensoreinrichtung 20 in Form einer Diode kann die rücklaufende Mikrowellenenergie gemessen werden. Die gemessenen Werte werden wiederum von einer Steuereinrichtung 15 aufgenommen und zur Leistungsabstimmung verwendet. Es wäre jedoch auch möglich, neben oder anstelle der von der Sensoreinrichtung gemessenen Werte die von dem Pyrometer 34 ausgegebenen Werte zur Leistungs- bzw. Energieabstimmung zu verwenden. Daneben könnte das Pyrometer auch verwendet werden, um die Erwärmungsphase zu verändern.

Das Bezugszeichen 14 bezieht sich in seiner Gesamtheit auf eine Energieabstimmungseinheit, welche hier zwei Antriebe 26 in Form von Linearmotoren aufweist. Weiterhin weist die Energieabstimmungseinheit 14 zwei Regulierkörper bzw. Tuning-Stifte 24, 24a auf, deren Position in Richtung des Pfeils P1 gegenüber dem Hohlleiter 6 verändert werden kann. Die Steuereinrichtung 15 ändert bei Bedarf während des laufenden Betriebs, d. h. der laufenden Erwärmung der Behältnisse, die Position des Regulierkörpers 24 gegenüber dem Rechteckhohlleiter und regelt damit die auf das Behältnis aufgebrachte Mikrowellenenergie. Bei aus dem Stand der Technik bekannten Vorrichtungen werden teilweise wenigstens drei Regulierkörper vorgesehen. Bei den hier vorgeschlagenen Ausführungsformen sind jedoch auch zwei derartige Regulierkörper ausreichend.

In der Resonatoreinheit 16 ist, wie erwähnt, zumindest abschnittsweise das Behältnis 10 angeordnet, um dort erwärmt zu werden. Dabei weist die Resonatoreinheit 16 ein Gehäuse 8 auf, innerhalb dessen ein Hohlraum 25 ausgebildet wird. Weiterhin weist das Resonatorgehäuse 8 jeweils Innenwandungen auf, welche dem Vorformling zugewandt sind.

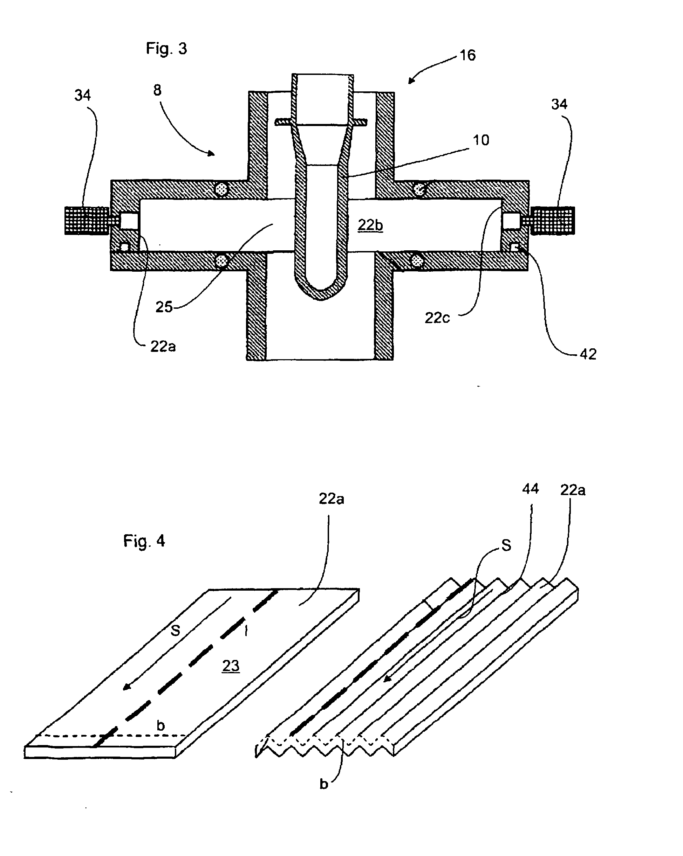

Fig. 3 zeigt eine detailliertere Darstellung der Resonatoreinheit 16. Man erkennt, dass diese Resonatoreinheit 16 mehrere Innenwandungen, von denen hier lediglich die Innenwandungen 22a, 22b und 22c gezeigt sind, welche den oben erwähnten Hohlraum 25 bzw. Aufnahmeraum für die Behältnisse begrenzen, aufweist. Dabei muss dieser Aufnahmeraum nicht vollständig abgeschlossen sein. Innerhalb dieser Innenwandungen sollen die Stromverluste, welche durch die Mikrowellenbeaufschlagung entstehen, reduziert werden. Die Mikrowellen gelangen über einen Eingangsbereich 12 (vgl. Fig. 2) in die Resonatoreinheit 16.

Die Bezugszeichen 34 beziehen sich auf Temperatursensoren, welche die Temperatur im Inneren des Resonators 16 d.h. insbesondere in dem Hohlraum 25 bestimmen.

Man erkennt, dass das Gehäuse 8 hier zweiteilig aufgebaut ist. Das Bezugszeichen 42 bezieht sich auf eine Nut, welche in einem der beiden Gehäuseteile angeordnet ist. Durch diese Nut 42 kann der Anpressdruck zwischen den beiden Gehäuseteilen erhöht werden, da die Nut 42 die Auflagefläche der Verschraubung reduziert. Auf diese Weise wird der Stromwiderstand reduziert.

Fig. 4 zeigt eine Darstellung einer Wandung 22a. Dabei bezieht sich das Bezugszeichen L auf eine Längenrichtung innerhalb der Wandung 22a und das Bezugszeichen S auf eine Stromflussrichtung. Damit fließt hier der durch die Mikrowellen erzeugte Strom in den Wandungen entlang der Linie S. In dem rechten Teilbild von Fig. 4 weist diese Wandung 22a eine gewellte Form d.h. eine Vielzahl von Zacken 44 auf. Auf diese Weise wird eine Erstreckung der Wandung 22a in der in Fig. 4 gezeigten Richtung b vergrößert und, wie oben erwähnt, wird auf diese Weise die besagte Breite b erhöht und auf diese Weise der Widerstand verringert. Das Bezugszeichen 23 kennzeichnet die Oberfläche der Wandung.

Daneben kann die Wandung 22a auch eine Beschichtung aus einem gut stromleitenden Material insbesondere Silber oder Kupfer aufweisen, um auf diese Weise, wie oben erwähnt Strömungsverluste zu reduzieren. Auch kann die Oberfläche 23 der Wandung poliert sein, wie eingangs erwähnt. Die erwähnten Maßnahmen zur Vergütung der Oberflächen können auch auf einer Innenwandung der Leitungseinrichtung bzw. des Hohlleiters 6 Anwendung finden.

## Patentansprüche

1. Vorrichtung (1) zum Erwärmen von Behältnissen und insbesondere von Kunststoffvorformlingen (10) mit wenigstens einer Mikrowellenerzeugungseinheit (4), welche ein elektromagnetisches Wechselfeld in Form von Mikrowellen erzeugt, einer Mikrowellenübertragungseinheit (6), welche die von der Mikrowellenerzeugungseinheit (4) erzeugten Mikrowellen an eine Resonatoreinheit (16) überträgt, und mit einer Transporteinrichtung, welche die Kunststoffvorformlinge (10) gegenüber der Resonatoreinheit (16) transportiert, wobei die Resonatoreinheit (16) ein einen Aufnahmeraum (25) zur Erwärmung der Kunststoffvorformlinge (10) ausbildendes Resonatorgehäuse (8) mit wenigstens einer den Kunststoffvorformlingen (10) zugewandten Innenwandung (22a, 22b, 22c) und einen Einkoppelbereich (12) aufweist, über den die Mikrowellen in die Resonatoreinheit (16) eingeführt werden,
**dadurch gekennzeichnet, dass**
die Innenwandung (22a, 22b, 22c) an ihrer den Kunststoffvorvormlingen (10) zugewanden Oberfläche wenigstens abschnittsweise eine Vergütung durch eine Wandungspolitur oder -strukturierung aufweist oder sich die Innenwandung (22a, 22b, 22c) aus einem Trägermaterial und einer auf der den Kunststoffvorformlingen zugewandten Oberfläche dieses Trägermaterials angeordneten Beschichtung zusammensetzt, wobei diese Beschichtung eine höhere Stromleitfähigkeit aufweist als das Trägermaterial, wobei die durch Mikrowellen hervorgerufene Wandstromverluste verringert werden.

2. Vorrichtung nach Anspruch 1,
**dadurch gekennzeichnet, dass**
die Innenwandung (22a, 22b, 22c) zur Verringerung deren Oberflächenrauhigkeit poliert ist.

3. Vorrichtung nach Anspruch 2,
**dadurch gekennzeichnet, dass**
die Innenwandung (22a, 22b, 22c) eine Oberflächenrauhigkeit aufweist, welche geringer ist als $3\mu m$, bevorzugt geringer als $2\mu m$, und besonders bevorzugt geringer als $1\mu m$.

4. Vorrichtung nach wenigstens einem der vorangegangenen Ansprüche,
**dadurch gekennzeichnet, dass**
eine Schichtdicke d der Beschichtung höher ist als eine Eindringtiefe der Mikrowellen.

5. Vorrichtung nach wenigstens einem der vorangegangenen Ansprüche,
**dadurch gekennzeichnet, dass**
das Resonatorgehäuse (8) mehrteilig aufgebaut ist.

6. Vorrichtung nach Anspruch 5,
**dadurch gekennzeichnet, dass**
Teilungslinien des mehrteilig aufgebauten Resonatorgehäuses im Wesentlichen parallel zu der Stromrichtung (S) der Wandströme verlaufen.

7. Vorrichtung nach wenigstens einem der vorangegangenen Ansprüche,
**dadurch gekennzeichnet, dass**
die Innenwandung (22a, 22b, 22c) in einer parallel zu einer Richtung (S) des durch die Mikrowellen in der Innenwandung (22a, 22b, 22c) erzeugten Stromes verlaufenden Richtung eine Strukturierung aufweist.

8. Vorrichtung nach Anspruch 5,
**dadurch gekennzeichnet, dass**
die Strukturierung in Form von Wellen und/oder Zacken ausgebildet ist.

## Claims

1. An apparatus (1) for the heating of containers and, in particular of plastics material pre-forms (10), with at least one microwave production unit (4) which produces an electromagnetic alternating field in the form of microwaves, a microwave transmission unit (6) which transmits the microwaves produced by the microwave production unit (4) to a resonator unit (16), and with a conveying device which conveys the plastics material pre-forms (10) with respect to the resonator unit (16), wherein the resonator unit (16) has a resonator housing (8) forming a receiving space (25) for heating the plastics material pre-forms (10) and having at least one inner wall (22a, 22b, 22c) facing the plastics material pre-forms (10) and a coupling-in area (12) by way of which the microwaves are introduced into the resonator unit (16), **characterized in that** the inner wall (22a, 22b, 22c) is treated at least locally on its surface facing the plastics material pre-forms (10) by a wall polish or structuring or the inner wall (22a, 22b, 22c) is formed from a carrier material and a coating provided on the surface of this carrier material which faces the plastics material pre-forms, wherein this coating has a higher electrical conductivity than the carrier material, whereby the wall current losses caused by the microwaves are reduced.

2. An apparatus according to claim 1, **characterized in that** the inner wall (22a, 22b, 22c) is polished in order to reduce the surface roughness thereof.

3. An apparatus according to claim 2, **characterized in that** the inner wall (22a, 22b, 22c) has a surface roughness which is less than 3 $\mu$m, preferably less than 2 $\mu$m and in a particularly preferred manner less than 1 $\mu$m.

4. An apparatus according to claim 4, **characterized in that** a layer thickness d of this coating is greater than a depth of penetration of the microwaves.

5. An apparatus according to any one of the preceding claims, **characterized in that** the resonator housing (8) is formed in a multiplicity of parts.

6. An apparatus according to claim 6, **characterized in that** division lines of the resonator housing formed in a multiplicity of parts extend substantially parallel to the flow direction (S) of the wall currents.

7. An apparatus according to any one of the preceding claims, **characterized in that** the inner wall (22a, 22b, 22c) has a texturing in a direction extending parallel to a direction (S) of the current produced by the microwaves in the inner wall (22a, 22b, 22c).

8. An apparatus according to claim 6, **characterized in that** the texturing is produced in the form of waves and/or prongs.

**Revendications**

1. Système (1) de chauffage de récipients et plus particulièrement de pré-formes en matière plastique (10), avec au moins une unité génératrice de micro-ondes (4) générant un champ électromagnétique alternatif sous forme de micro-ondes, une unité de transmission de micro-ondes (6) transmettant les micro-ondes générées par l'unité génératrice de micro-ondes (4) à une unité de résonateur (16), et avec un dispositif de transport transportant les pré-formes en matière plastique (10) devant l'unité de résonateur (16), ladite unité de résonateur (16) comportant un carter de résonateur (8) formant un compartiment de réception (25) pour le chauffage des pré-formes en matière plastique (10), avec au moins une paroi intérieure (22a, 22b, 22c) opposée aux pré-formes en matière plastique (10) et une zone de couplage (12) par laquelle les micro-ondes sont introduites dans l'unité de résonateur (16),
**caractérisé en ce que**,
sur sa surface opposée aux pré-formes en matière plastique (10), la paroi intérieure (22a, 22b, 22c) est au moins partiellement traitée par polissage ou structuration de paroi, ou **en ce que** la paroi intérieure (22a, 22b, 22c) se compose d'un matériau support et d'un revêtement appliqué sur la surface opposée aux pré-formes en matière plastique dudit matériau porteur, ledit revêtement présentant une conductivité électrique supérieure à celle du matériau porteur, les pertes de courant dans la paroi dues aux micro-ondes étant ainsi réduites.

2. Système selon la revendication 1, **caractérisé en ce que** la paroi intérieure (22a, 22b, 22c) est polie afin de diminuer sa rugosité de surface.

3. Système selon la revendication 2, **caractérisé en ce que** la paroi intérieure (22a, 22b, 22c) présente une rugosité de surface inférieure à 3 $\mu$m, de préférence inférieure à 2 $\mu$m, et plus particulièrement inférieure à 1 $\mu$m.

4. Système selon au moins une des revendications précédentes, **caractérisé en ce qu'**une épaisseur de couche dudit revêtement est supérieure à une profondeur de pénétration des micro-ondes.

5. Système selon au moins une des revendications précédentes, **caractérisé en ce que** le carter de résonateur (8) est construit en plusieurs parties.

6.  Système selon la revendication 5, **caractérisé en ce que** des lignes de partage du carter de résonateur construit en plusieurs parties s'étendent sensiblement parallèlement à la direction de flux (S) des courants de paroi.

7.  Système selon au moins une des revendications précédentes, **caractérisé en ce que** la paroi intérieure (22a, 22b, 22c) présente une structuration dans une direction s'étendant parallèlement à une direction (S) du courant généré par les micro-ondes dans ladite paroi intérieure (22a, 22b, 22c).

8.  Système selon la revendication 5, **caractérisé en ce que** la structuration est réalisée sous la forme d'ondulations et/ou de dents.

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007022386 A1
- DE 102006015475 A1
- WO 2007131701 A
- JP 9295342 A